# EUROPÄISCHE PATENTSCHRIFT

(11) **EP 3 163 322 B1**
(45) Veröffentlichungstag und Bekanntmachung des Hinweises auf die Patenterteilung: **31.01.2018**
(21) Anmeldenummer: 16188238.6
(22) Anmeldetag: 12.09.2016
(51) Int. Cl.: G01S 17/42, G01S 7/481, G01S 7/497

(54) **LASERSCANNER UND VERFAHREN ZUR ÜBERPRÜFUNG VON DESSEN FUNKTIONSFÄHIGKEIT**
LASER SCANNER AND METHOD FOR TESTING ITS FUNCTIONAL CAPABILITY
SCANNER LASER ET PROCÉDÉ DE VÉRIFICATION DE SA CAPACITÉ DE FONCTIONNEMENT

(30) Priorität: 27.10.2015 DE 102015118258
(43) Veröffentlichungstag der Anmeldung: 03.05.2017
(73) Patentinhaber: SICK AG, 79183 Waldkirch (DE)
(72) Erfinder: Engler, Michael, 79350 Sexau (DE); Joachim, Krämer, 79249 Merzhausen (DE); Hammes, Markus, 79117 Freiburg (DE)

(56) Entgegenhaltungen:
- EP-A2- 2 112 527
- DE-A1- 19 647 152
- DE-C1- 4 341 080
- US-A1- 2014 151 535

## Beschreibung

Die Erfindung betrifft einen Laserscanner und ein Verfahren zur Überprüfung eines Laserscanners nach dem Oberbegriff von Anspruch 1 beziehungsweise 10.

In einem Laserscanner überstreicht ein von einem Laser erzeugter Lichtstrahl mit Hilfe einer Ablenkeinheit periodisch einen Überwachungsbereich. Das Licht wird an Objekten in dem Überwachungsbereich remittiert und in dem Scanner ausgewertet. Aus der Winkelstellung der Ablenkeinheit wird auf die Winkellage des Objektes und aus der Lichtlaufzeit unter Verwendung der Lichtgeschwindigkeit zusätzlich auf die Entfernung des Objektes von dem Laserscanner geschlossen. Für herkömmliche Laserscanner sind zwei grundsätzliche Prinzipien bekannt, die Lichtlaufzeit zu bestimmen. Bei phasenbasierten Verfahren wird das kontinuierliche Sendelicht moduliert und die Phasenverschiebung des empfangenen gegenüber dem gesendeten Licht ausgewertet. Bei pulsbasierten Verfahren oder Pulslaufzeitverfahren arbeitet der Sender in einem Einzelpulsbetrieb mit verhältnismäßig hohen Pulsenergien, und der Laserscanner misst Objektabstände anhand der Laufzeit zwischen dem Aussenden und Empfangen eines Einzellichtpulses. In einem beispielsweise aus der EP 2 469 296 B1 bekannten Pulsmittelungsverfahren werden für eine Messung eine Vielzahl von Einzelpulsen ausgesandt und die Empfangspulse statistisch ausgewertet.

Mit den Winkel- und Entfernungsangaben ist der Ort eines Objektes in dem Überwachungsbereich in zweidimensionalen Polarkoordinaten erfasst. Damit lassen sich die Positionen von Objekten ermitteln oder deren Kontur bestimmen. Die dritte Raumkoordinate kann durch eine Relativbewegung in Querrichtung ebenfalls erfasst werden, beispielsweise durch einen weiteren Bewegungsfreiheitsgrad der Ablenkeinheit in dem Laserscanner oder indem das Objekt relativ zu dem Laserscanner befördert wird. So können auch dreidimensionale Konturen ausgemessen werden.

Laserscanner werden nicht nur für allgemeine Messaufgaben, sondern auch in der Sicherheitstechnik zur Überwachung einer Gefahrenquelle eingesetzt, wie sie beispielsweise eine gefährliche Maschine darstellt. Ein derartiger Sicherheitslaserscanner ist aus der DE 43 40 756 A1 bekannt. Dabei wird ein Schutzfeld überwacht, das während des Betriebs der Maschine vom Bedienpersonal nicht betreten werden darf. Erkennt der Laserscanner einen unzulässigen Schutzfeldeingriff, etwa ein Bein einer Bedienperson, so löst er einen Nothalt der Maschine aus. Andere Eingriffe in das Schutzfeld, beispielsweise durch statische Maschinenteile, können vorab als zulässig eingelernt werden. Oft sind den Schutzfeldern Warnfelder vorgelagert, wo Eingriffe zunächst nur zu einer Warnung führen, um den Schutzfeldeingriff und damit die Absicherung noch rechtzeitig zu verhindern und so die Verfügbarkeit der Anlage zu erhöhen. Sicherheitslaserscanner arbeiten meist pulsbasiert.

Sicherheitslaserscanner müssen besonders zuverlässig arbeiten und deshalb hohe Sicherheitsanforderungen erfüllen, beispielsweise die Norm EN 13849 für Maschinensicherheit und die Gerätenorm EN61496 für berührungslos wirkende Schutzeinrichtungen (BWS). Zur Erfüllung dieser Sicherheitsnormen sind eine Reihe von Maßnahmen zu treffen, wie sichere elektronische Auswertung durch redundante, diversitäre Elektronik, Funktionsüberwachung oder speziell Überwachung der Verschmutzung optischer Bauteile, insbesondere einer Frontscheibe.

Eine Möglichkeit zur Funktionsüberprüfung ist die Verwendung eines internen Referenzzielsystems, mit dessen Hilfe die fehlerfreie Abstandsmessung und deren unbeeinträchtigte Empfindlichkeit überprüft werden. Das Referenzziel wird in jedem Umlauf der Ablenkeinheit optisch angetastet und das Signalecho im Hinblick auf Signalstärke und Abstandswert ausgewertet. Es ist üblich, einen zusammenhängenden Winkelbereich exklusiv für die Referenzzielmessung zu verwenden. In diesem Winkelbereich befindet sich auch der Träger, an dem die Ablenkeinheit mit Motor, Drehspiegel und Winkelencoder aufgehängt ist. Dadurch wird der Sichtbereich gegenüber den an sich möglichen 360° eingeschränkt.

Die Referenzzielmessung erlaubt die Überwachung und Nachregelung mehrerer Leistungsmerkmale und Messergebnisse. Zunächst erlaubt der Vergleich mit eingelernten Erwartungswerten die Beurteilung, ob die Detektionsfähigkeit des Sicherheitslaserscanners eingeschränkt ist. Dadurch kann die gesamte Signalkette mit allen darin enthaltenen Bauelementen vom Sendepuls bis zur Bestimmung des Abstandswerts geprüft werden, einschließlich der Signalstärke des Sendestrahls, die sich für eine sichere Detektion einerseits und zur Einhaltung des Augenschutzes andererseits innerhalb von vorgegebenen Toleranzgrenzen befinden muss. Zudem kann ein aktueller Abstandsoffset ermittelt oder nachgeregelt werden, der beispielsweise durch temperaturabhängige interne Signallaufzeitschwankungen verursacht wird. Schließlich sind verschiedene Plausibilitätsprüfungen möglich.

Um alle diese Anforderungen zu erfüllen, wird ein zweigeteiltes Referenzziel mit hoher und niedriger Remission eingesetzt, das entsprechend ein Referenzsignal hoher Signalstärke und ein Referenzsignal niedriger Signalstärke liefert. Eine bekannte Lösung verwendet dafür einen Retroreflektor für einen optischen Kurzschluss beziehungsweise ein diffuses Lamberttarget, für das ein gewünschter sehr geringer Signalpegel leicht eingestellt werden kann. Durch die räumliche Trennung der beiden Referenzziele und die erforderlichen Befestigungen wird ein relativ großer Winkelbereich blockiert.

Es ist auch möglich, die beiden Referenzziele zu kombinieren. Beispielsweise erzeugt ein senkrecht auf das Referenzziel fallender Sendelichtstrahl das starke Referenzsignal. Bei schrägem Einfallswinkel dagegen wird das Sendelicht gestreut und führt so zu einem deutlich geringeren Signalpegel, der als schwaches Referenzsignal genutzt wird. Nun ist aber ein Laserscanner insbesondere im rauen industriellen Umfeld über seinen Lebenszyklus wechselnden Umwelteinflüssen wie Temperaturschwankungen, UV-Licht, Verschmutzung und Luftfeuchte ausgesetzt. Das kann zu einer Degradation des Referenzziels selbst oder der an der Weiterleitung des Referenzlichts beteiligten Bauteile führen. Dadurch wird Streulicht auf undefinierten Wegen zum Empfänger geleitet, oder die veränderten Remissionseigenschaften des Referenzziels sorgen für Abweichungen von den erwarteten Referenzwerten. Eine Streulichtmessung ist also nicht ausreichend langzeitstabil.

Aus der EP 2 112 527 A2 ist ein Referenzziel zur Kalibrierung eines Laserscanners bekannt, wobei sich die Reflektivität des Referenzziels in Scanrichtung des Laserstrahls ändert. Das wird beispielsweise durch eine sich graduell ändernde Schwärzung erreicht. Somit ist dies eine weitere Lösung, in der zwar die beiden Referenzziele zusammengefasst sind, jedoch die Stabilitätsprobleme einer Streulichtmessung weiter bestehen.

Die DE 196 47 152 A1 offenbart einen Laserscanner mit einem Referenzziel aus mehreren Tripelelementen, die den Scanstrahl als Referenzstrahl in sich zurückwerfen. Den Tripelelementen ist ein Dämpfungsfilter mit abnehmendem Dämpfungsgrad vorgeordnet, so dass in verschiedenen Drehstellungen ein unterschiedlich starkes Referenzsignal erzeugt wird.

Es ist deshalb Aufgabe der Erfindung, einen Laserscanner mit verbesserter Funktionsüberprüfung anzugeben.

Diese Aufgabe wird durch einen Laserscanner und ein Verfahren zur Überprüfung eines Laserscanners nach Anspruch 1 beziehungsweise 10 gelöst. Ein Laserscanner weist eine drehbare Ablenkeinheit auf, also beispielsweise einen rotierenden Optikkopf mit Lichtsender und Empfänger oder einen rotierenden Drehspiegel, und tastet auf diese Weise periodisch eine Scan- oder Überwachungsebene ab. Bei zusätzlicher Verkippung der Ablenkeinheit wird der Überwachungsbereich zu einem dreidimensionalen Raumbereich. In bestimmten Referenzwinkelstellungen der Ablenkeinheit gelangt der ausgesandte Lichtstrahl nicht in den Überwachungsbereich, sondern wird intern mit hoher beziehungsweise geringer Intensität an einem Referenzziel zurückgeworfen, um ein starkes und ein schwaches Referenzsignal zu erzeugen. Mit diesen Referenzsignalen wird die Signalkette und damit die Funktionsfähigkeit des Laserscanner überprüft.

Die Erfindung geht nun von dem Grundgedanken aus, das gleiche Referenzziel für das starke und schwache Referenzsignal zu nutzen. Je nach Winkelstellung der Ablenkeinheit und sich daraus ergebendem Einfall auf das Referenzziel wird der ausgesandte Lichtstrahl an einer vorderen Fläche oder einer zu der vorderen Fläche verkippten oder schräg stehenden hinteren Fläche des Referenzziels zurückgeworfen. Die vordere und hintere Fläche, wobei sich diese relativen Begriffe auf die Ausbreitungsrichtung des ausgesandten Lichtstrahls beziehen, stehen somit in einer keilförmigen Anordnung, und insbesondere ist das Referenzziel selbst ein Keil. Das starke und schwache Referenzsignal entstehen durch die unterschiedlichen Lichtwege am und in dem Referenzziel.

Die Erfindung hat den Vorteil, dass nur ein Referenzziel verwendet werden muss. Diese Bauteilereduktion senkt Herstellkosten und Montageaufwand und verkleinert das optische System, vor allem Motorhalter und Frontscheibe. Dadurch werden eine weitere Miniaturisierung des Laserscanners und ein größerer Scanwinkel näher an 360° möglich. Weiterhin wird nicht nur das starke, sondern auch das schwache Referenzsignal aus dem direkten Sendelicht statt wie herkömmlich aus dem in vielen Fällen stark schwankenden Streulicht gebildet. Es gibt hier kein diffuses Streulicht von dem Referenzziel, und das Referenzsignal ist unempfindlich gegenüber Sendestreulicht, folglich die gesamte Referenzzielmessung nicht nur kompakter, sondern auch wesentlich robuster und langzeitstabiler.

Der das Referenzsignal erzeugende Lichtstrahl wird bevorzugt in der ersten Referenzdrehstellung an der vorderen Fläche direkt reflektiert und in der zweiten Referenzdrehstellung nach Transmission der vorderen Fläche an der hinteren Fläche reflektiert und transmittiert dann die vordere Fläche erneut. Selbstverständlich sind erste und zweite Referenzdrehstellung nur austauschbare Namen und legen auch keine Reihenfolge fest. Das Sendelicht wird demnach für das starke Referenzsignal direkt zurückgespiegelt und entsteht aus praktisch der vollen Sendeleistung, wobei eine Abschwächung durch Oberflächeneigenschaften der vorderen Fläche bei Bedarf denkbar ist. In dem schwachen Referenzsignal dagegen fehlen die Lichtanteile, die an der vorderen Fläche bei Eintritt in das Referenzziel und Austritt aus dem Referenzziel weggespiegelt werden, also gar nicht im Lichtempfänger registriert werden. Hinzu kommen gewünschte Verluste bei der Reflexion an der hinteren Fläche durch deren Oberflächeneigenschaften sowie Dämpfungen in dem Referenzziel selbst. Dadurch ist eine erhebliche Abschwächung auf jedes praktisch erforderliche schwache Referenzsignal möglich. Trotzdem wird auch für das schwache Referenzsignal stets das gespiegelte Sendelicht selbst und kein diffuses, schwer zu beherrschendes und gerade über längere Zeiten nicht unbedingt stabiles Streulicht verwendet.

Das Referenzziel ist bevorzugt ein Prisma. Das ist ein einfaches optisches Element mit den geforderten Eigenschaften der vorderen und hinteren Fläche. Es kann leicht aus einem Werkstoff wie Glas oder Kunststoff gefertigt werden, insbesondere auch einstückig.

Alternativ sind die vordere und hintere Fläche nicht eben wie bei einem einfachen Prisma, sondern in sich gekrümmt. Dabei ist eine einfache konvexe oder konkave Krümmung ebenso denkbar wie eine komplexere Formgebung insbesondere als Freiformfläche. Dadurch werden zusätzliche Freiheitsgrade geboten, um beispielsweise strahlformende Eigenschaften zu erzielen oder das Winkelverhalten zu beeinflussen, also den Winkelbereich einzustellen, in dem die jeweilige Fläche den Scanstrahl zum Lichtempfänger zurückwirft und somit tatsächlich als Referenzziel wirkt.

Das Referenzziel ist vorzugsweise ein gemeinsames Referenzziel. Vordere Fläche und hintere Fläche bilden also ein gemeinsames Bauteil. Dieses Bauteil weist nochmals bevorzugt in sich überall gleichartige Eigenschaften auf wie beispielsweise ein Prisma, lässt also in sich keine zwei oder mehr Zonen unterschiedlicher Remissionseigenschaften erkennen. Vielmehr ergeben sich die unterschiedlich starken Referenzsignale allein aus dem Einfall des ausgesandten Lichtstrahls beziehungsweise aus dessen Einfalls- oder Messwinkel, also letztlich der Drehstellung der Ablenkeinheit, und den daraus resultierenden Lichtwegen an dem Referenzziel und in dem Referenzziel.

Die vordere Fläche und/oder die hintere Fläche weist bevorzugt zum Erreichen eines bestimmten Reflexionsgrads eine Beschichtung auf. Nochmals bevorzugt ist die Beschichtung homogen, weist also keine örtlichen Unterschiede im Remissionsgrad oder gar einzelne Zonen für ein starkes und schwaches Referenzsignal auf. Die Beschichtung der vorderen Fläche legt einerseits fest, wieviel Sendelicht für das starke Referenzsignal zurückgeworfen wird, zugleich aber auch, wieviel Sendelicht für das schwache Referenzsignal durch Wegspiegeln verlorengeht. Eine Beschichtung der hinteren Fläche kann alternativ oder kumulativ als weitere Stellgröße für das schwache Referenzsignal erfolgen, und diese Beschichtung kann einen gleichen oder unterschiedlichen Reflexionsgrad aufweisen wie diejenige der vorderen Fläche. Auch nach einer Beschichtung sind vordere und hintere Fläche weiterhin Spiegelflächen, der Effekt zur Erzeugung der Referenzsignale ist also keine diffuse Remission, und es entsteht kein Streulicht.

Das Referenzziel weist bevorzugt zwischen vorderer Fläche und hinterer Fläche ein nur teilweise lichtdurchlässiges Material auf. Der Körper des Referenzziels ist dann nicht ganz durchsichtig, um die Intensität für das schwache Referenzsignal abzusenken, also teilabsorbierend und beispielsweise leicht oder stärker geschwärzt.

Dem Lichtempfänger ist bevorzugt eine Empfangsoptik zugeordnet, die eine Empfangszone für den das Referenzsignal erzeugenden Lichtstrahl aufweist. Hauptaufgabe der Empfangsoptik ist, über den gesamten Öffnungswinkel Empfangslicht aus dem Überwachungsbereich zu sammeln und dem Lichtempfänger zuzuleiten. Das Referenzziel kann gegenüber dem Öffnungswinkel klein sein, und um die Strahlformungseigenschaften auch für das Referenzsignal zu optimieren, wird ein entsprechend kleiner Teil der Empfangsoptik als Empfangszone für das Referenzlicht ausgelegt. Auf die Gesamtwirkung der Empfangsoptik hat das praktisch keine Auswirkung. Die Apertur von Empfangszone und Referenzziel ist im Übrigen eine weitere Einflussgröße für die Signalstärke des Referenzsignals.

Der Laserscanner ist bevorzugt als Entfernungsmesser ausgebildet, indem die Auswertungseinheit die Lichtlaufzeit zwischen Aussenden und Empfang des Lichtsignals und daraus die Entfernung eines Objekts bestimmt. Damit können wesentlich genauere Objektinformationen gewonnen werden als durch bloße Feststellung der Anwesenheit von Objekten. Die Prüfung der Funktionsfähigkeit anhand des Referenzsignals schließt dann vorzugsweise eine Entfernungsmessung ein, die bei korrekt arbeitendem Laserscanner für das Referenzziel die erwartete Entfernung ergibt.

Vorzugsweise ist eine Winkelmesseinheit zur Erfassung der Winkelstellung der Ablenkeinheit vorgesehen. Insgesamt stehen dann für erfasste Objekte vollständige zweidimensionale Positionskoordinaten zur Verfügung. Im Falle eines räumlich ausgedehnten Überwachungsbereichs wird auch der jeweilige Kippwinkel der Abtasteinheit erfasst, so dass insgesamt dreidimensionale Kugelkoordinaten erhalten werden, welche die Objektposition innerhalb des Überwachungsbereichs ebenfalls vollständig beschreiben.

Der Laserscanner ist bevorzugt als Sicherheitslaserscanner ausgebildet und weist einen Sicherheitsausgang auf, wobei die Auswertungseinheit dafür ausgebildet ist zu bestimmen, ob sich ein Objekt in einem Schutzfeld innerhalb des Überwachungsbereichs befindet, und daraufhin ein sicherheitsgerichtetes Abschaltsignal über den Sicherheitsausgang auszugeben. Ein Sicherheitslaserscanner ist ein sicherer Laserscanner im Sinne einer Sicherheitsnorm wie einleitend beschrieben und kann deshalb insbesondere zum Personenschutz an Gefahrenquellen eingesetzt werden. Die Referenzzielmessung trägt zur Einhaltung dieser Normen bei. Allerdings bedeutet das keineswegs, dass nicht auch ein nicht in diesem Sinne sicherer Laserscanner von der erfindungsgemäßen Referenzzielmessung profitieren könnte.

Das erfindungsgemäße Verfahren kann auf ähnliche Weise weitergebildet werden und zeigt dabei ähnliche Vorteile. Derartige vorteilhafte Merkmale sind beispielhaft, aber nicht abschließend in den sich an die unabhängigen Ansprüche anschließenden Unteransprüchen beschrieben.

Die Erfindung wird nachstehend auch hinsichtlich weiterer Merkmale und Vorteile beispielhaft anhand von Ausführungsformen und unter Bezug auf die beigefügte Zeichnung näher erläutert. Die Abbildungen der Zeichnung zeigen in:
- Fig. 1: eine schematische Schnittdarstellung eines Laserscanners;
- Fig. 2a: eine schematische Darstellung des Strahlengangs an einem Referenzziel bei direkter Reflexion an einer vorderen Fläche;
- Fig. 2b: eine schematische Darstellung des Strahlengangs an einem Referenzziel bei Reflexion an einer hinteren Fläche mit zweimaliger Transmission der vorderen Fläche;
- Fig. 3a: eine Teildarstellung der optischen Elemente eines Laserscanners mit Strahlengang bei Erzeugung eines starken Referenzsignals;
- Fig. 3b: eine Ansicht der Situation der Figur 3a von unten auf die Ablenkeinheit und das Referenzziel;
- Fig. 4a: eine Teildarstellung der optischen Elemente eines Laserscanners mit Strahlengang bei Erzeugung eines schwachen Referenzsignals;
- Fig. 4b: eine Ansicht der Situation der Figur 4a von unten auf die Ablenkeinheit und das Referenzziel; und
- Fig. 5: eine Teildarstellung der optischen Elemente eines Laserscanners zur Illustration der Strahlführung und einer besonderen Empfangszone der Empfangsoptik für den das Referenzsignal erzeugenden Lichtstrahl.

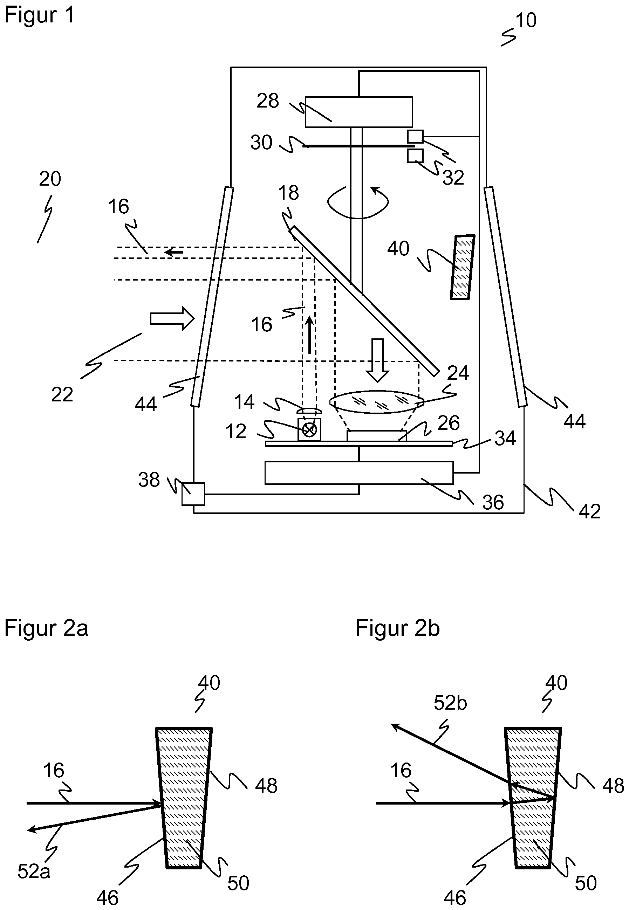

Fig. 1 zeigt eine schematische Schnittdarstellung durch einen Laserscanner 10. Ein Lichtsender 12, beispielsweise mit einer Laserlichtquelle, erzeugt mit Hilfe einer Sendeoptik 14 einen Sendelichtstrahl 16, der an einer Ablenkeinheit 18 in einen Überwachungsbereich 20 umgelenkt wird. Fällt der Sendelichtstrahl 16 in dem Überwachungsbereich 20 auf ein Objekt, so gelangt remittiertes Licht 22 wieder zu dem Laserscanner 10 zurück und wird dort über die Ablenkeinheit 18 und mittels einer Empfangsoptik 24 von einem Lichtempfänger 26 detektiert, beispielsweise einer Photodiode oder einer APD (Avalanche Photo Diode).

Die Ablenkeinheit 18 ist in dieser Ausführungsform als Drehspiegel ausgestaltet, die durch Antrieb eines Motors 28 kontinuierlich rotiert. Die jeweilige Winkelstellung des Motors 28 beziehungsweise der Ablenkeinheit 18 wird über einen Encoder erkannt, der beispielsweise eine Codescheibe 30 und eine Gabellichtschranke 32 umfasst. Der von dem Lichtsender 12 erzeugte Sendelichtstrahl 16 überstreicht somit den durch die Rotationsbewegung erzeugten Überwachungsbereich 20. Anstelle eines Drehspiegels ist auch möglich, die Ablenkeinheit 18 als rotierenden Optikkopf auszubilden, in dem Lichtsender 12 und/oder Lichtempfänger 26 und möglicherweise weitere Elemente untergebracht sind. Auch die Gestaltung von Sendeoptik 14 und Empfangsoptik 24 kann variiert werden, etwa über einen strahlformenden Spiegel als Ablenkeinheit, eine andere Anordnung der Linsen oder zusätzliche Linsen. Insbesondere sind Laserscanner auch in einer Autokollimationsanordnung bekannt. In der dargestellten Ausführungsform sind Lichtsender 12 und Lichtempfänger 26 auf einer gemeinsamen Leiterkarte 34 untergebracht. Auch das ist nur ein Beispiel, denn es können eigene Leiterkarten sowie andere Anordnungen beispielsweise mit einem gegenseitigen Höhenversatz vorgesehen sein.

Wird nun von dem Lichtempfänger 26 remittiertes Licht 22 aus dem Überwachungsbereich 20 empfangen, so kann aus der von dem Encoder 30, 32 gemessenen Winkelstellung der Ablenkeinheit 18 auf die Winkellage des Objektes in dem Überwachungsbereich 20 geschlossen werden. Zusätzlich wird vorzugsweise die Lichtlaufzeit von Aussenden eines Lichtsignals bis zu dessen Empfang nach Reflexion an dem Objekt in dem Überwachungsbereich 20 ermittelt und unter Verwendung der Lichtgeschwindigkeit auf die Entfernung des Objektes von dem Laserscanner 10 geschlossen.

Diese Auswertung erfolgt in einer Auswerteeinheit 36, die dafür mit dem Lichtsender 12, dem Lichtempfänger 26, dem Motor 28 und dem Encoder 32 verbunden ist. Somit stehen über den Winkel und die Entfernung zweidimensionale Polarkoordinaten aller Objekte in dem Überwachungsbereich 20 zur Verfügung. In sicherheitstechnischer Anwendung prüft die Auswertungseinheit 36, ob ein unzulässiges Objekt in einen innerhalb des Überwachungsbereichs 20 festgelegten Schutzbereich eingreift. Ist das der Fall, wird über einen Sicherheitsausgang 38 (OSSD, Output Signal Switching Device) ein Absicherungssignal an eine überwachte Gefahrenquelle, beispielsweise eine Maschine ausgegeben. Der Laserscanner 10 ist in derartigen sicherheitstechnischen Anwendungen durch Maßnahmen entsprechend der einleitend genannten Normen ein sicherer Laserscanner. In andern Ausführungsformen ist anstelle des Sicherheitsausgangs 38 oder zusätzlich dazu eine Schnittstelle zur Ausgabe von Messdaten oder beispielsweise zum Parametrieren des Laserscanners 10 vorgesehen.

Ein Referenzziel 40 ist in einem Winkelbereich des Laserscanners 10 angeordnet, der in der Figur 1 gerade um 180° versetzt zu Sendelichtstrahl 16 und remittiertem Licht 22 dargestellt ist. Wenn die Ablenkeinheit 18 im Verlauf ihrer Drehbewegung entsprechende Winkelstellungen einnimmt, verlässt der Sendelichtstrahl 16 den Laserscanner 10 nicht, sondern wird innerhalb des Laserscanners 10 von dem Referenzziel 40 zurückgeworfen. Der Lichtempfänger 22 erzeugt in diesem Fall kein Empfangssignal zum Erfassen von Objekten in dem Überwachungsbereich 20, sondern ein Referenzsignal, das für eine im Folgenden anhand der Figuren 2 bis 5 näher erläuterte Funktionsüberprüfung genutzt wird. In dem Winkelbereich, den das Referenzziel 40 einnimmt, liegt ein Totbereich der Messung, so dass der Laserscanner 10 keinen vollen Winkelbereich von 360° erfassen kann. In diesem Totbereich können auch wie dargestellt Leitungen geführt oder bei alternativen Anordnungen des Motors dessen Aufhängung untergebracht sein. Alle genannten Funktionskomponenten sind in einem Gehäuse 42 angeordnet, das im Bereich des Lichtaus- und Lichteintritts eine Frontscheibe 44 aufweist.

Figur 2a-b zeigt das Referenzziel 40 in einer Draufsicht, wobei in Figur 2a ein beispielhafter Strahlengang zum Erzeugen eines starken Referenzsignals und in Figur 2b zum Erzeugen eines schwachen Referenzsignals dargestellt ist. Welcher Strahlengang zum Tragen kommt, hängt von der Winkelstellung der Ablenkeinheit 18 ab, d. h. in einem bestimmten Winkelbereich wird von demselben Referenzziel 40 ein starkes Referenzsignal und in einem anderen Winkelbereich ein schwaches Referenzsignal erzeugt.

Das Referenzziel 40 ist in diesem Beispiel ein Keil oder Prisma, das beispielsweise aus Glas oder Kunststoff hergestellt ist. Neben der geometrischen Gestalt und Größe des Referenzziels ist auch dessen Einbauwinkel ein Freiheitsgrad, der zur Optimierung des Referenzsignals beitragen kann. An der Strahlführung beteiligt sind ohnehin nur Teilbereiche der vorderen Fläche 46 und der hinteren Fläche 48 sowie das dazwischenliegende Material 50 im Inneren, so dass die übrige Gestalt des Referenzziels 40 völlig beliebig ist.

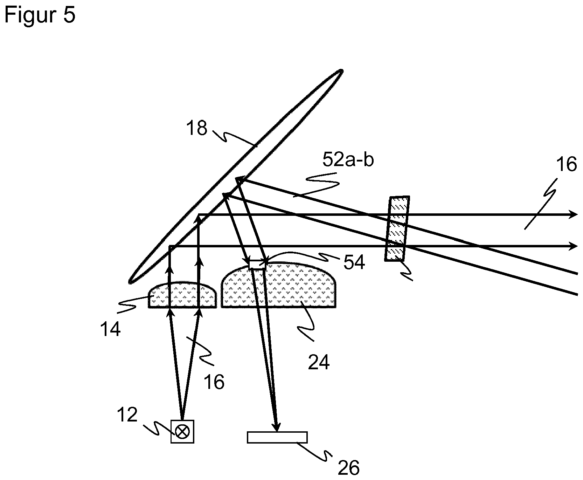

In Figur 2a fällt der Sendelichtstrahl 16 so auf die vordere Fläche 46, dass die direkte Reflexion als das Referenzsignal erzeugender Lichtstrahl oder kurz starker Referenzlichtstrahl 52a über Ablenkeinheit 18 und Empfangsoptik 24 zu dem Lichtempfänger 26 geleitet wird. Diese Bedingungen sind nur in einem sehr kleinen Winkelbereich erfüllt. Es ist denkbar, die Empfangsoptik 24 für eine Erfassung des Referenzlichtstrahls 52 anzupassen, wie später zu Figur 5 erläutert. Ein Winkelbereich von 1-2° genügt für die Erfassung des Referenzsignals.

Die Signalstärke des starken Referenzsignals entspricht somit in erster Betrachtung der vollen Sendestärke. Tatsächlich hängt sie noch von der Apertur des in der Empfangsoptik 24 durchsetzten Bereiches und des Referenzziels 40 ab. Außerdem kann die vordere Fläche 46 beschichtet werden, um einen bestimmten Reflexionsgrad beispielsweise von 95% zu erzielen.

In Figur 2b wird nun nicht der an der vorderen Fläche 46 gespiegelte, sondern der transmittierte Anteil des Sendelichtstrahls 16 betrachtet. Hier sind die Winkelbedingungen in der zugehörigen Drehstellung der Ablenkeinheit 18 so, dass der an der vorderen Fläche 46 in Referenzziel 40 eintretende, an der hinteren Fläche 48 reflektierte und erneut von innen her an der vorderen Fläche 46 austretende schwache Referenzlichtstrahl 52b über Ablenkeinheit 18 und Empfangsoptik 24 zu dem Lichtempfänger 26 geleitet wird. Auch die hintere Fläche 48 kann beschichtet beziehungsweise verspiegelt werden, um einen bestimmten Reflexionsgrad und damit Signalpegel des schwachen Referenzsignals einzustellen. Weisen beispielsweise vordere Fläche 46 und hintere Fläche 48 jeweils einen Reflexionsgrad von 98% auf, so ergibt sich für das starke Referenzsignal ein relativer Signalpegel von 0,98 und für das schwache Referenzsignal von 0,02^2*0,98=0,00039 wegen der zweifachen Transmission der vorderen Fläche 46 und der einfachen Reflexion an der hinteren Fläche 48. Mehrfachreflexionen in dem Referenzziel 40 können wegen der Signalabschwächung und der verschiedenen Reflexionswinkel vernachlässigt werden. Eine zusätzliche Signalabschwächung kann durch Teilabsorption in dem Material 50 im Inneren des Referenzziels 40 erreicht werden, indem dieses Material 50 beispielsweise geschwärzt wird.

Für den Winkelbereich, in dem der schwache Referenzlichtstrahl 52b empfangen wird, gilt im Prinzip das gleiche wie für den starken Referenzlichtstrahl 52a. Die jeweiligen Winkelpositionen lassen sich durch den Keilwinkel des Referenzziels 40 einstellen. Da die Reflexionen innerhalb des Lichtsenders 12 im Sendelichtstrahl 16 zu einem Streulichthof von mehreren Grad um den eigentlichen Sendelichtstrahl 16 führen, sollten die Winkelbereiche für das starke Referenzsignal und das schwache Referenzsignal entsprechend voneinander beabstandet sein, beispielsweise um 10° bei Streulichthof von 5°-8°.

Die Figuren 2a-b sind eine Prinzipbetrachtung. Tatsächlich entstehen immer sowohl der starke Referenzlichtstrahl 52a als auch der schwache Referenzlichtstrahl 52b, wenn der Sendelichtstrahl 16 das Referenzziel 40 trifft. Es wird jedoch in einer bestimmten Winkelstellung der Ablenkeinheit 18 nur einer davon empfangen und der andere weggespiegelt.

Das Referenzziel 40 kann ein einfaches, einheitliches optisches Element wie ein Prisma sein. Es bedarf keinerlei besonderer Zonen oder Unterschiede in der Beschichtung innerhalb der vorderen Fläche 46 oder der hinteren Fläche 48, um wie herkömmlich ein unterschiedliches Remissionsverhalten zu bewirken. Es entsteht kein Streulicht an dem Referenzziel 40, und für das Referenzsignal wird jeweils reflektiertes Sendelicht genutzt.

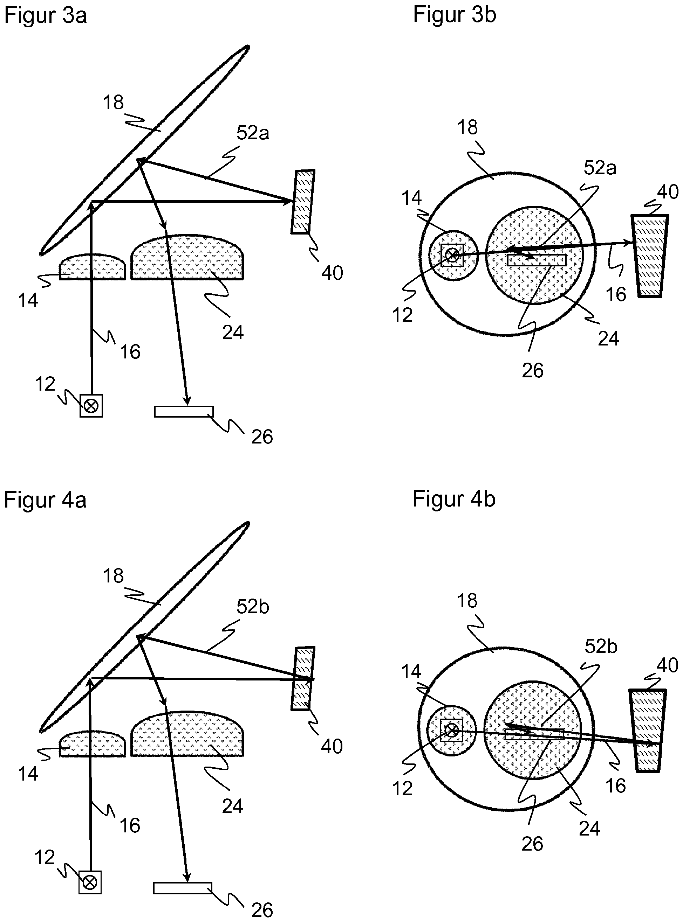

Die Figuren 3a-b zeigen die Erzeugung des starken Referenzsignals noch einmal anhand einer Teildarstellung des optischen Systems eines Laserscanners 10, wobei Figur 3a eine Schnittdarstellung und Figur 3b eine Draufsicht ist. Die Figuren 4a-b zeigen entsprechende Ansichten bei Erzeugung des starken Referenzsignals. Der Unterschied zwischen den Figuren 3a-b und 4a-b ist also, dass sich die Ablenkeinheit 18 ein Stück gedreht hat. Deshalb wird in Figur 3a-b die direkte Reflexion an der vorderen Fläche 46, in Figur 4a-b dagegen die wesentlich schwächere Reflexion an der hinteren Fläche 48 bei zweimaliger Transmission der vorderen Fläche 46 empfangen. Die Reihenfolge, in der starkes und schwaches Referenzsignal erzeugt werden, hängt von der Drehrichtung der Ablenkeinheit 18 sowie Geometrie und Anordnung des Referenzziels 40 ab und spielt ohnehin keine besondere Rolle. Sämtliche Elemente sind mit den gleichen Bezugszeichen versehen wie in den Figuren 1 und 2 und dort bereits erläutert.

Figur 5 zeigt nochmals eine Teildarstellung des optischen Systems ähnlich Figur 3a oder 4a. Allerdings werden nun nicht nur die Hauptstrahlen betrachtet, um eine optionale Empfangszone 54 der Empfangsoptik 24 für den Referenzlichtstrahl 52a-b zu erläutern. Der Teilbereich der Empfangsoptik 24, durch den die Referenzlichtstrahlen 52a-b fallen, ist vergleichsweise klein. Daher haben Veränderungen durch die Empfangszone 54 so gut wie keine Auswirkungen auf das optische Gesamtsystem.

Die Empfangszone 54 ist rein schematisch als rechteckiger Funktionsblock gezeigt. Tatsächlich wird durch entsprechende Krümmung und Neigung der Empfangszone 54 eine Strahlformung erreicht, die nicht nur den Referenzlichtstrahl 52a-b führt, sondern auch dafür sorgt, dass der Laserscanner 10 weder die Frontscheibe 44 noch zu nahe Objekte sieht. Wie in Figur 5 zu sehen, überlappen Sende- und Empfangsstrahlengang nur im Bereich des Referenzziels 40 und kurz dahinter nicht mehr, um falsche Signalanteile der Referenz durch Frontscheibe 44 oder sonstige Objekte auszuschließen. Außerdem kann eine leichte Aufweitung des Referenzlichtstrahls 52a-b die Montagetoleranz erhöhen.

Die Empfangszone 54 ist übrigens nicht nur im Zusammenhang mit dem erfindungsgemäßen Referenzziel 40 nützlich, sondern kann auch bei einem Referenzziel eingesetzt werden, das wie herkömmlich als Kombination aus Reflektor und diffusem Streuziel gebildet ist. Allerdings verhindert dies nicht das unerwünschte Streulicht.

## Patentansprüche

1. Laserscanner (10) mit einem Lichtsender (12) zum Aussenden eines Lichtstrahls (16) in einen Überwachungsbereich (20), einem Lichtempfänger (26) zum Erzeugen eines Empfangssignals aus dem von Objekten in dem Überwachungsbereich (20) remittierten Lichtstrahl (22), einer drehbaren Ablenkeinheit (18) zur periodischen Ablenkung des Lichtstrahls (16, 22), um im Verlauf der Bewegung den Überwachungsbereich (20) abzutasten, einem internen Referenzziel (40), das den ausgesandten Lichtstrahl (16) in einer ersten Referenzdrehstellung der Ablenkeinheit (18) mit hoher Intensität und in einer zweiten Referenzdrehstellung der Ablenkeinheit (18) mit geringer Intensität innerhalb des Laserscanners (10) zu dem Lichtempfänger (26) zurückwirft, um ein starkes und ein schwaches Referenzsignal zu erzeugen, und mit einer Auswertungseinheit (36), die dafür ausgebildet ist, Objekte anhand des Empfangssignals zu erfassen sowie die Funktionsfähigkeit des Laserscanners (10) anhand des Referenzsignals zu prüfen,
**dadurch gekennzeichnet,**
**dass** das Referenzziel (40) eine jeweils bezüglich der Ausbreitungsrichtung des ausgesandten Lichtstrahls vordere Fläche (46) und hintere Fläche (48) aufweist und die hintere Fläche (48) gegen die vordere Fläche (46) verkippt ist, wobei in der ersten Referenzdrehstellung die vordere Fläche (46) das starke Referenzsignal und in der zweiten Referenzdrehstellung die hintere Fläche (48) das schwache Referenzsignal erzeugt, so dass das schwache und starke Referenzsignal durch die unterschiedlichen Lichtwege am und in dem Referenzziel (40) entstehen.

2. Laserscanner (10) nach Anspruch 1,
wobei der das Referenzsignal erzeugende Lichtstrahl (52a-b) in der ersten Drehstellung an der vorderen Fläche (46) direkt reflektiert wird und in der zweiten Drehstellung nach Transmission der vorderen Fläche (46) an der hinteren Fläche (48) reflektiert wird und dann die vordere Fläche (46) erneut transmittiert.

3. Laserscanner (10) nach Anspruch 1 oder 2,
wobei das Referenzziel (40) ein Prisma ist.

4. Laserscanner (10) nach einem der vorhergehenden Ansprüche,
wobei das Referenzziel (40) ein gemeinsames Referenzziel ist.

5. Laserscanner (10) nach einem der vorhergehenden Ansprüche,
wobei die vordere Fläche (46) und/oder die hintere Fläche (48) zum Erreichen eines bestimmten Reflexionsgrads eine Beschichtung aufweist.

6. Laserscanner (10) nach einem der vorhergehenden Ansprüche,
wobei das Referenzziel (40) zwischen vorderer Fläche (46) und hinterer Fläche (48) ein nur teilweise lichtdurchlässiges Material (50) aufweist.

7. Laserscanner (10) nach einem der vorhergehenden Ansprüche,
wobei dem Lichtempfänger (26) eine Empfangsoptik (24) zugeordnet ist, die eine Empfangszone (54) für den das Referenzsignal erzeugenden Lichtstrahl (52a-b) aufweist.

8. Laserscanner (10) nach einem der vorhergehenden Ansprüche,
der als Entfernungsmesser ausgebildet ist, indem die Auswertungseinheit (36) die Lichtlaufzeit zwischen Aussenden und Empfang des Lichtsignals (16, 22) und daraus die Entfernung eines Objekts bestimmt und/oder wobei eine Winkelmesseinheit (30, 32) zur Erfassung der Winkelstellung der Ablenkeinheit (18) vorgesehen ist.

9. Laserscanner (10) nach einem der vorhergehenden Ansprüche,
der als Sicherheitslaserscanner ausgebildet ist und einen Sicherheitsausgang (38) aufweist, wobei die Auswertungseinheit (36) dafür ausgebildet ist zu bestimmen, ob sich ein Objekt in einem Schutzfeld innerhalb des Überwachungsbereichs (20) befindet, und daraufhin ein sicherheitsgerichtetes Abschaltsignal über den Sicherheitsausgang (38) auszugeben.

10. Verfahren zur Überprüfung der Funktionsfähigkeit eines Laserscanners (10), der einen Überwachungsbereich (20) abtastet, indem ein ausgesandter Lichtstrahl (16) durch eine sich drehende Ablenkeinheit (18) periodisch abgelenkt, aus dem von Objekten in dem Überwachungsbereich (20) remittierten Lichtstrahl (22) ein Empfangssignal erzeugt und das Empfangssignal zum Erfassen von Objekten ausgewertet wird, wobei zum Überprüfen der Funktionsfähigkeit ein starkes und ein schwaches Referenzsignal ausgewertet werden, die an einem internen Referenzziel (40) erzeugt werden, das so angeordnet ist, dass der ausgesandte Lichtstrahl (16) in einer ersten Referenzdrehstellung der Ablenkeinheit (18) mit hoher Intensität und in einer zweiten Referenzdrehstellung der Ablenkeinheit (18) mit geringer Intensität innerhalb des Laserscanners (10) zurückgeworfen wird,
**dadurch gekennzeichnet**,
das der Lichtstrahl (52a) zur Erzeugung des starken Referenzsignals an einer vorderen Fläche (46) und der Lichtstrahl (52b) zur Erzeugung des schwachen Referenzsignals an einer gegen die vordere Fläche (46) verkippten hinteren Fläche (48) des Referenzziels (40) zurückgeworfen wird, wobei vordere Fläche (46) und hintere Fläche (48) bezüglich der Ausbreitungsrichtung des ausgesandten Lichtstrahls (16) definiert sind, so dass das schwache und starke Referenzsignal durch die unterschiedlichen Lichtwege am und in dem Referenzziel (40) entstehen.

## Claims

1. A laser scanner (10) having a light transmitter (12) for transmitting a light beam (16) into a monitoring area (20), a light receiver (26) for generating a reception signal from a remitted light beam (22) remitted by objects in the monitoring area (20), a rotatable deflection unit (18) for periodically deflecting the light beam (16, 22) in order to scan the monitoring area (20) in the course of the movement, an internal reference target (40) which reflects the transmitted light beam (16) within the laser scanner (10) to the light receiver (26) with a high intensity in a first reference rotational position of the deflection unit (18) and with a low intensity in a second reference rotational position of the deflection unit (18) for generating a strong reference signal and a weak reference signal, and an evaluation unit (36) which is configured to detect objects based on the reception signal and to test the operability of the laser scanner (10) based on the reference signals, **characterized in that** the reference target (40) has, relative to the propagation direction of the transmitted light beam (16), a front surface (46) and a rear surface (48), the rear surface (48) being tilted with respect to the front surface (46), wherein the front surface (46) generates the strong reference signal in the first reference rotational position and the rear surface (48) generates the weak reference signal in the second reference rotational position, so that the weak reference signal and the strong reference signal are generated by the different light paths at and in the reference target (40).

2. The laser scanner (10) according to claim 1,
wherein the light beam (52a-b) generating the reference signal is directly reflected at the front surface (46) in the first rotational position and is reflected at the rear surface (48) after transmission of the front surface (46), with subsequently again transmitting the front surface (46), in the second rotational position.

3. The laser scanner (10) according to claim 1 or 2,
wherein the reference target (40) is a prism.

4. The laser scanner (10) according to one of the preceding claims,
wherein the reference target (40) is a common reference target.

5. The laser scanner (10) according to one of the preceding claims,
wherein the front surface (46) and/or the rear surface (48) comprise a coating to obtain a certain reflectance.

6. The laser scanner (10) according to one of the preceding claims,
wherein the reference target (40) comprises a material (50) between front surface (46) and rear surface (48) which is only partially translucent.

7. The laser scanner (10) according to one of the preceding claims,
wherein reception optics (24) having a reception zone (54) for the light beam (52a-b) generating the reference signal are associated with the light receiver (26).

8. The laser scanner (10) according to one of the preceding claims,
which is configured as distance-measuring in that the evaluation unit (36) determines a light time of flight between transmission and reception of the light signal (16, 22) and, from that, calculates a distance of an object and/or wherein there is provided an angle measuring unit (30, 32) for detecting an angular position of the deflection unit (18).

9. The laser scanner (10) according to one of the preceding claims,
which is configured as a safety laser scanner comprising a safety output (38), wherein the evaluation unit (36) is configured to determine whether there is an object in a protected field within the monitoring area (20) and to then output a safety-related shutdown signal via the safety output (38).

10. A method for testing the operability of a laser scanner (10) which scans a monitoring area (20) in that a transmitted light beam (16) is periodically deflected by a rotating deflection unit (18), a reception signal is generated from the remitted light beam (22) remitted by objects in the monitoring area (20), and the reception signal is evaluated, wherein for testing the operability a strong reference signal and a weak reference signal are evaluated which are generated at an internal reference target (40) which is arranged so that the transmitted light beam (16) is reflected within the laser scanner (10) with high intensity in a first reference rotational position of the deflection unit (18) and with low intensity in a second reference rotational position of the deflection unit (18),
**characterized in that** the light beam (52a) for generating the strong reference signal is reflected by a front surface (46) of the reference target (40) and the light beam (52b) for generating the weak reference signal is reflected by a rear surface (48) of the reference target (40), the rear surface (48) being tilted with respect to the front surface (46), wherein front surface (46) and rear surface (48) are defined with respect to the propagation direction of the transmitted light beam (16), so that the weak reference signal and the strong reference signal are generated by the different light paths at and in the reference target (40).

## Revendications

1. Scanneur laser (10) comportant un émetteur de lumière (12) pour émettre un rayon lumineux (16) dans une zone à surveiller (20), un récepteur de lumière (26) pour générer un signal de réception à partir du rayon lumineux (22) réémis par des objets dans la zone à surveiller (20), une unité de déviation rotative (18) pour dévier périodiquement le rayon lumineux (16, 22) afin de balayer la zone à surveiller (20) au cours du mouvement, une cible de référence interne (40) qui, dans une première position de rotation de référence de l'unité de déviation (18), réfléchit le rayon lumineux émis (16) à haute intensité vers le récepteur de lumière (26) à l'intérieur du scanneur laser (10), et qui, dans une seconde position de rotation de référence de l'unité de déviation (18), le réfléchit à faible intensité, afin de générer un signal de référence fort et un signal de référence faible, et comportant une unité d'évaluation (36) qui est réalisée pour détecter des objets en se basant sur le signal de réception et pour vérifier la capacité de fonctionnement du scanneur laser (10) en se basant sur le signal de référence,
**caractérisé en ce que**
la cible de référence (40) présente une surface avant (46) et une surface arrière (48) par rapport à la direction de propagation du rayon lumineux émis, et la surface arrière (48) est basculée par rapport à la surface avant (46), et dans la première position de rotation de référence la surface avant (46) génère le signal de référence fort, et dans la seconde position de rotation de référence la surface arrière (48) génère le signal de référence faible, de sorte que les signaux de référence faible et fort résultent des différents chemins optiques sur et dans la cible de référence (40).

2. Scanneur laser (10) selon la revendication 1, dans lequel dans la première position de rotation, le rayon lumineux (52a - b) qui génère le signal de référence est directement réfléchi sur la surface avant (46), et dans la seconde position de rotation il est réfléchi sur la surface arrière (48) après transmission par la surface avant (46), et ensuite la surface avant (46) le transmet de nouveau.

3. Scanneur laser (10) selon la revendication 1 ou 2, dans lequel la cible de référence (40) est un prisme.

4. Scanneur laser (10) selon l'une des revendications précédentes, dans lequel la cible de référence (40) est une cible de référence commune.

5. Scanneur laser (10) selon l'une des revendications précédentes, dans lequel la surface avant (46) et/ou la surface arrière (48) présente(nt) un revêtement pour atteindre un degré de réflexion déterminé.

6. Scanneur laser (10) selon l'une des revendications précédentes, dans lequel la cible de référence (40) comprend un matériau (50) seulement partiellement translucide entre la surface avant (46) et la surface arrière (48).

7. Scanneur laser (10) selon l'une des revendications précédentes, dans lequel une optique de réception (24) est associée au récepteur de lumière (26), qui présente une zone de réception (54) pour le rayon lumineux (52a - b) générant le signal de référence.

8. Scanneur laser (10) selon l'une des revendications précédentes, qui est réalisé sous forme de télémètre du fait que l'unité d'évaluation (36) détermine le temps de parcours de la lumière entre l'émission et la réception du signal lumineux (16, 22) et en détermine la distance d'un objet, et/ou il est prévu une unité de mesure angulaire (30, 32) pour détecter la position angulaire de l'unité de déviation (18).

9. Scanneur laser (10) selon l'une des revendications précédentes, qui est réalisé sous forme de scanneur laser de sécurité et qui présente une sortie de sécurité (38), dans lequel l'unité d'évaluation (36) est réalisée pour déterminer si un objet se trouve dans un champ de protection à l'intérieur de la zone à surveiller (20) et pour ensuite émettre un signal de coupure de sécurité par la sortie de sécurité (38).

10. Procédé de surveillance de la capacité de fonctionnement d'un scanneur laser (10) qui balaie une zone à surveiller (20) du fait qu'un rayon lumineux (16) émis est périodiquement dévié par une unité de déviation rotative (18), un signal de réception est généré à partir du rayon lumineux (22) réémis par des objets dans la zone à surveiller (20), et le signal de réception est évalué pour détecter des objets, dans lequel pour vérifier la capacité de fonctionnement, on évalue un signal de référence fort et un signal de référence faible qui sont générés sur une cible de référence interne (40) qui est agencée de telle sorte que dans une première position de rotation de référence de l'unité de déviation (18) le rayon lumineux émis (16) est réfléchi à haute intensité à l'intérieur du scanneur laser (10) et dans une seconde position de rotation de référence de l'unité de déviation (18) il est réfléchi à faible intensité,
**caractérisé en ce que**
le rayon lumineux (52a) pour générer le signal de référence fort est réfléchi sur une surface avant (46), et le rayon lumineux (52b) pour générer le signal de référence faible est réfléchi sur une surface arrière (48), basculée par rapport à la surface avant (46), de la cible de référence, la surface avant (46) et la surface arrière (48) étant définies par rapport à la direction de propagation du rayon lumineux émis (16), de sorte que les signaux de référence faible et fort résultent des différents chemins optiques sur et dans la cible de référence (40).
